# FASCICULE DE BREVET EUROPEEN

(11) **EP 4 440 845 B1**
(45) Date de publication et mention de la délivrance du brevet: **08.10.2025**
(21) Numéro de dépôt: 22826149.1
(22) Date de dépôt: 23.11.2022
(51) Int. Cl.: B41M 5/24, B41M 5/26, C25D 11/18, C25D 11/04

(54) **PROCEDE DE MARQUAGE LASER CONTRASTE DE SURFACE DE PIECES EN ALUMINIUM OU EN ALLIAGE D'ALUMINIUM ANODISEES**
VERFAHREN ZUR OBERFLÄCHENKONTRASTLASERMARKIERUNG ANODISIERTER ALUMINIUM- ODER ALUMINIUMLEGIERUNGSTEILE
METHOD FOR SURFACE CONTRAST LASER MARKING OF ANODISED ALUMINIUM OR ALUMINIUM ALLOY PARTS

(30) Priorité: 29.11.2021 FR 2112629
(43) Date de publication de la demande: 09.10.2024
(73) Titulaire: Safran Aerosystems, 78370 Plaisir (FR)
(72) Inventeur: EPALLE, Patrick, 77550 Moissy-Cramayel (FR); DREVET, Jean-Arthur, 77550 Moissy-Cramayel (FR); MAKHLOUF, Nordine, 77550 Moissy-Cramayel (FR); MOIROUD, Cynthia, 77550 Moissy-Cramayel (FR)
(74) Mandataire: Gevers & Orès
(86) Numéro de dépôt international: PCT/FR2022/052161
(87) Numéro de publication internationale: WO 2023/094766

(56) Documents cités:
- WO-A1-2021/152241
- CN-A- 109 183 122
- US-A1- 2003 201 259
- US-A1- 2011 193 928
- US-A1- 2014 034 115

## Description

### Domaine technique de l'invention

Le domaine de l'invention concerne le marquage ou gravage laser contrasté des pièces en aluminium ou en alliage d'aluminium visant à améliorer la résistance de ces pièces à la biocorrosion et à des environnements de brouillard salin.

Le marquage laser contrasté permet également de créer un marquage contrasté sur une surface de pièce en aluminium ou en alliage d'aluminium, sans enlèvement de matière, ce qui facilite et garantit une visibilité et une lecture fiable et répétable d'un code du type data matrix (DMC ou Data Matrix Code en anglais) ou d'identification unique d'une pièce (UDI ou Unique Device Identification en anglais) par exemple, et ce quel que soit l'environnement dans lequel se réalise la lecture (environnement sombre ou clair) et l'angle sous lequel s'effectue la lecture.

Les pièces en aluminium ou en alliage d'aluminium marquées par laser contrasté sont destinées notamment aux secteurs aéronautique, aérospatial, automobile, ferroviaire, horlogerie, médical, nucléaire, pétrolier, etc.

### Arrière-plan technique

Le marquage des pièces métalliques de textes, logos, images, chiffres, codes 2D, etc. pour la traçabilité, l'anti-contrefaçon et/ou l'identification des pièces est utilisé dans de nombreux secteurs comme aéronautique, aérospatial, automobile, ferroviaire, horlogerie, médical, nucléaire, pétrolier, etc. Dans le cadre de cet exposé, les termes « marquage » et « gravage » peuvent être utilisés de manière interchangeable pour désigner la même opération ou méthode. Le marquage laser est une méthode qui a suscité un intérêt croissant au cours des dernières décennies car elle présente des avantages : elle est rapide, elle permet un marquage haute précision pour une qualité constante, elle résiste à l'usure, à la chaleur. Cependant, le marquage laser est une méthode soustractive se basant sur l'utilisation d'un faisceau laser qui, à chaque impulsion laser, enlève de la matière. Les pièces métalliques notamment en aluminium ou en alliage d'aluminium, ainsi marquées sont mises à nu (par exemple, teinte blanche-aluminium brut) et ne résistent pas à la corrosion et à la biocorrosion. Actuellement, le traitement anti-corrosion postérieur au marquage consiste en une conversion chimique par l'application d'un revêtement de protection, par exemple, avec la Bonderite MCR 1200 de la société Henkel, ou avec du Surtec 650 de la société Surtec. Ceci implique donc plus d'étapes de fabrication du composant ou de l'équipement, un temps de cycle de fabrication plus long, et une augmentation de risque non qualité car plus il y a d'étapes dans un cycle de fabrication plus il y a un risque de mauvaise réalisation, etc. Dans le cas d'un gravage/marquage à teinte blanche, les pièces ne peuvent pas résister à la biocorrosion même avec un post-traitement (de conversion, par exemple).

US 2003/0201259 décrit un procédé de marquage de surface d'une pièce en aluminium ou en alliage d'aluminium comportant en surface une couche anodisée, le procédé comprenant une étape de marquage d'une région de la surface par un faisceau laser ayant une longueur d'onde comprise entre 700 et 1400 nm, en particulier entre 1000 et 1100 nm, et plus particulièrement de1064 nm. Le faisceau laser pénètre au moins en majeure partie dans la couche en surface anodisée et induit localement un changement visuel pouvant être observé à l'œil nu. Les zones de la couche anodisée non marquées situées plus loin vers l'extérieur restent inchangées. L'effet protecteur de la couche anodisée n'est pas endommagé, et la couche reste dépourvue d'irrégularités sur son côté extérieur comme avant l'application du marquage.

Un autre inconvénient des marquages laser réalisés sur les pièces métalliques, notamment en aluminium ou en alliage d'aluminium, est sa visibilité et sa lisibilité. Actuellement les marquages sont peu contrastés et donc peu visibles/lisibles ou ne sont lisibles que dans certains environnements et sous certaines conditions. Le traitement post-marquage par conversion chimique peut également altérer la visibilité/lisibilité du marquage.

Il existe donc un réel besoin d'un procédé de marquage de surface d'une pièce en aluminium ou en alliage d'aluminium utilisant le laser, qui permette d'améliorer les propriétés de résistance à la biocorrosion et corrosion de pièces en aluminium ou en alliage d'aluminium, et ce sans nécessiter de traitement de conversion chimique post-marquage, et qui soit conforme au règlement REACH.

En particulier, il existe un réel besoin d'un procédé de marquage de surface d'une pièce en aluminium ou en alliage d'aluminium utilisant le laser :
- qui permette un marquage contrasté où le contraste entre les marquages laser et le substrat traité est augmenté sensiblement pour faciliter la visibilité, la lisibilité, et la lecture dudit marquage quel que soit l'environnement ; et/ou
- qui permette un marquage haute précision pour une qualité constante résistant à l'usure et aux environnements corrosifs ; et/ou
- qui convienne aux marquages petits et fins sur des surfaces réduites, comme par exemple les codes DMC (Data Matrix Code en anglais) et UDI (Unique Device Identification en anglais) ; et/ou
- qui permette à la pièce munie du marquage de résister à des environnements corrosifs, au brouillard salin et à la biocorrosion sans nécessiter une étape supplémentaire de traitement de conversion chimique post-marquage.

### Résumé de l'invention

La présente invention a précisément pour but de répondre à ces besoins, en particulier, en termes de résistance à la corrosion et à la biocorrosion de la pièce traitée et de visibilité/lisibilité du marquage, en fournissant un procédé de marquage de surface d'une pièce en aluminium ou en alliage d'aluminium, comportant au moins les étapes suivantes :
**A)** une étape d'anodisation ;
**B)** une étape de colmatage de la couche anodique formée sur ladite pièce à l'issue de l'étape **A),**
   le colmatage étant réalisé
   dans une solution aqueuse d'eau déionisée ayant une résistivité égale ou supérieure à 0,01 MOhms, de préférence égale ou supérieure à 0,1 MOhms, plus préférentiellement égale ou supérieure à 10 MOhms, et de 1 à 500g/L d'un silicate de métal alcalin ou de métal alcalinoterreux, à une température comprise entre 60°C et 100°C,
      ou
   dans de l'eau déionisée ayant une résistivité égale ou supérieure à 0,01 MOhms, de préférence égale ou supérieure à 0,1 MOhms, plus préférentiellement égale ou supérieure à 10 MOhms, à une température comprise entre 60°C et 100°C ;
**D)** une étape de marquage par un faisceau laser à fibre présentant une ou plusieurs des caractéristiques suivantes
   - une longueur d'onde supérieure à 800 nm, par exemple égale à 1064nm,
   - une durée d'impulsion comprise entre 0,5 et 10 ns,
   - une fréquence du laser comprise entre 400 et 3000 kHz,
   - une puissance comprise entre 5 et 80W, par exemple comprise entre 8 à 20W,
   - une vitesse comprise entre 1000 et 3000 mm/s,
   - une interligne comprise entre 0,0001 et 0,1 mm,
   - un temps de marquage compris entre 4 et 200 sec.

L'étape B est obligatoire, sans colmatage la tenue à la corrosion et biocorrosion n'est plus conforme. Néanmoins derrière l'étape B se cache deux options : colmatage avec sel de silicate ou à l'eau bouillante seule (sans sel de Silicate). La première permettra au gravage qui suivra (et qui fait l'objet de la demande de brevet) de garantir une tenue en corrosion et biocorrosion la deuxième permet seulement de garantir une tenue en corrosion du gravage ainsi réalisé.

Dans un mode de réalisation préféré, le laser à fibre est un laser amplificateur de puissance à oscillateur principal ou MOPA (Master Oscillator Power Amplifier en anglais).

Le marquage de surface d'une pièce en aluminium ou en alliage d'aluminium selon le procédé de l'invention est bien contrasté, c'est-à-dire que le contraste entre les marquages laser et la surface de la pièce traitée est sensiblement augmenté facilitant ainsi la visibilité et la lecture dudit marquage quel que soit l'environnement et quelle que soit la luminosité. Par ailleurs, la pièce en aluminium ou en alliage d'aluminium munie d'un marquage réalisé par le procédé de l'invention, présente une bonne résistance à la biocorrosion, à la corrosion notamment au brouillard salin et aux environnements corrosifs ou acides, et ce sans traitement chimique post-marquage. Un autre objet de l'invention concerne l'utilisation d'un procédé de marquage selon l'invention pour la fabrication ou le marquage de pièces en aluminium ou en alliage d'aluminium destinées aux secteurs aéronautique, aérospatial, automobile, ferroviaire, horlogerie, médical, nucléaire, pétrolier, etc.

### Brève description des figures

D'autres caractéristiques et avantages de l'invention apparaitront au cours de la lecture de la description détaillée qui va suivre pour la compréhension de laquelle on se reportera au dessin annexé dans lequel :

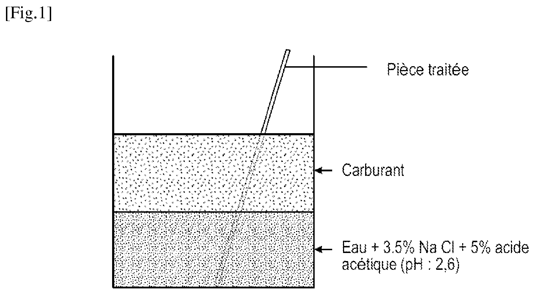

La Figure 1 représente le schéma du montage pour réaliser l'essai de biocorrosion des éprouvettes traitées par le procédé de l'invention suivant le § 4.7.19 de la norme MIL-C-27725B.

### Description détaillée de l'invention

La présente invention a précisément pour but de répondre à ces besoins, en particulier, en termes de résistance à la corrosion et à la biocorrosion de la pièce traitée et de visibilité/lisibilité du marquage, en fournissant un procédé de marquage de surface d'une pièce en aluminium ou en alliage d'aluminium, comportant au moins les étapes suivantes :
**A)** une étape d'anodisation ;
**B)** une étape de colmatage de la couche anodique formée sur ladite pièce à l'issue de l'étape **A),**
   le colmatage étant réalisé
   dans une solution aqueuse d'eau déionisée ayant une résistivité égale ou supérieure à 0,01 MOhms, de préférence égale ou supérieure à 0,1 MOhms, plus préférentiellement égale ou supérieure à 10 MOhms, et de 1 à 500g/L d'un silicate de métal alcalin ou de métal alcalinoterreux, à une température comprise entre 60°C et 100°C,
      ou
   dans de l'eau déionisée ayant une résistivité égale ou supérieure à 0,01 MOhms, de préférence égale ou supérieure à 0,1 MOhms, plus préférentiellement égale ou supérieure à 10 MOhms, à une température comprise entre 60°C et 100°C ;
**D)** une étape de marquage par un faisceau laser à fibre présentant une ou plusieurs des caractéristiques suivantes
   - une longueur d'onde supérieure à 800 nm, par exemple égale à 1064nm,
   - une durée d'impulsion comprise entre 0,5 et 10 ns,
   - une fréquence du laser comprise entre 400 et 3000 kHz,
   - une puissance comprise entre 5 et 80W, par exemple comprise entre 8 à 20W,
   - une vitesse comprise entre 1000 et 3000 mm/s,
   - une interligne comprise entre 0,0001 et 0,1 mm,
   - un temps de marquage compris entre 4 et 200 sec.

Le procédé selon l'invention permet un marquage contrasté sur les pièces en aluminium ou en alliage d'aluminium tel que la pièce munie de son marquage résiste à la corrosion notamment à des environnements de brouillard salin et à la biocorrosion.

L'étape d'anodisation **A)** est réalisée dans les conditions décrites dans la demande FR 3106837.

L'étape de colmatage **B),** lorsqu'elle a lieu dans une solution aqueuse d'eau déionisée et d'un silicate de métal alcalin ou de métal alcalinoterreux, tel que défini ci-dessus, est réalisée dans les conditions décrites dans la demande FR 3106837.

Selon un mode de réalisation préféré de l'invention, l'étape d'anodisation **A)** est une anodisation au cours de laquelle ladite pièce est immergée dans un bain aqueux comportant de l'acide sulfurique à une concentration comprise entre 150 et 250 g/L, à une température comprise entre 14 et 21 °C, et une tension continue est appliquée à ladite pièce immergée selon un profil de tension comportant une montée en tension à une vitesse inférieure à 1 V/min jusqu'à atteindre une valeur de tension dite de plateau comprise entre 5 et 13 V.

Une fois la valeur de tension dite de plateau atteinte, la tension appliquée est maintenue à ladite valeur de plateau pendant une durée adéquate pour obtenir en surface de ladite pièce une couche anodique d'épaisseur comprise entre 2 et 7µm.

La tension appliquée à ladite pièce immergée peut être maintenue à la valeur de plateau pendant une durée comprise entre 20 et 80 minutes.

La valeur de tension dite de plateau peut être comprise entre 6 et 10V.

Cette anodisation est une OAS fine (Oxydation Anodique Sulfurique fine).

Dans le procédé de l'invention, l'étape d'anodisation **A)** peut également être une anodisation du type TSA, OAS, PSAA, BSAA, ou OAC. Ces anodisations sont bien connues de l'homme du métier et sont également décrites dans : https://www.a3ts.org/actualite/commissions-techniques/fiches-techniques-traitement-surface/anodisation-sulfo-tartrique-oast-tartric-sulfuric-anodizine-tsa/ pour TSA (Tartaric sulfuric Anodizing en anglais), https://www.a3ts.org/actualite/commissions-techniques/fiches-techniques-traitement-surface/anodisation-sulfurique-version-5-2/ pour OAS (Oxydation Anodique Sulfurique), https://www.anoplate.com/finishes/boric-sulfuric-acid-anodize-bsaa/ pour BSAA (Boric sulfuric Acid Anodizing en anglais), http://www.metroplating.co.uk/phosphoric-acid-anodising.php pour PSAA (Phosporic sulfuric Acid Anodizing en anglais), etc.

De préférence, l'anodisation de l'étape **A)** est une OAS fine.

Le procédé de l'invention convient, plus particulièrement, à des pièces en aluminium et alliage d'aluminium choisi dans le groupe consistant 2014, 2017A, 2024, 2214, 2219, 2618, AU5NKZr, 7175, 5052, 5086, 6061, 6063, 7010, 7020, 7050, 7050 T7451, 7055 T77, 7068, 7085 T7651, 7075, 7175 et 7475, AS7G06, AS7G03, AS10G, AS9U3, AS7G06 et AS10G étant obtenu par un mode d'élaboration différent, à savoir, par fabrication additive.

Comme indiqué, le profil de tension appliquée à la pièce comporte une montée en tension, depuis une valeur de départ de 0V, à une vitesse inférieure à 1V/min, de préférence 0,3V/min à 0,7V/min, jusqu'à atteindre une valeur de tension dite de plateau comprise entre 5 et 13V, de préférence entre 6 et 10V. La tension appliquée à ladite pièce immergée dans ledit bain est ensuite maintenue à ladite valeur de plateau pendant une durée adéquate pour obtenir en surface de ladite pièce une couche anodique, d'oxydes/hydroxydes d'aluminium, d'épaisseur comprise entre 2 et 7µm, par exemple, d'épaisseur égale à environ 5µm.

Selon un mode de réalisation de l'invention, la tension appliquée à ladite pièce immergée est maintenue à la valeur de plateau pendant une durée comprise entre 20 et 80 minutes, de préférence entre 30 et 60 minutes.

Dans l'étape d'anodisation **A)** selon le mode de réalisation préféré de l'invention, la concentration en acide sulfurique dans le bain est, de préférence, comprise entre 160 g/L et 220 g/L, par exemple égale à 190 g/L.

Dans l'étape d'anodisation **A)** selon le mode de réalisation préféré de l'invention, la température du bain peut être comprise entre 10 et 25°C, de préférence, entre 14 et 21°C, par exemple égale à 18°C.

L'étape d'anodisation **A)** est suivi d'une étape **B)** qui est une étape de colmatage de la couche anodique formée sur ladite pièce lors de l'étape **A).**

Selon un mode de réalisation de l'invention, le procédé de l'invention comporte une étape d'anodisation **A),** une étape de colmatage **B)** et une étape de marquage **D).**

Dans une variante de l'invention, le colmatage de l'étape **B)** est réalisé dans une solution aqueuse
- d'eau déionisée ayant une résistivité égale ou supérieure à 0,01 MOhms, de préférence égale ou supérieure à 0,1 Mohms, et plus préférentiellement égale ou supérieure à 10 Mohms), et
- de 1 à 500g/L d'un silicate de métal alcalin ou de métal alcalinoterreux.

Le silicate de métal alcalin ou de métal alcalinoterreux peut être choisi dans le groupe consistant en silicate de lithium, silicate de sodium, silicate de potassium, silicate de calcium et silicate de magnésium.

La qualité d'eau du bain de colmatage est importante car elle a un impact sur la tenue de la couche anodique formée sur la pièce face à la biocorrosion. Une eau plus pure comme, par exemple, une eau ayant une résistivité égale ou supérieure à 10 MOhms est susceptible de fournir de meilleures tenues dans le temps qu'une eau ayant une résistivité inférieure à 10 MOhms. Selon une variante préférée, l'eau déionisée est une eau de montage c'est-à-dire une eau utilisée pour remplir un bain actif lors des montages/remplissages de celui-ci, ladite eau ayant une résistivité égale ou supérieure à 0,01 MOhms, de préférence égale ou supérieure à 0,1 MOhms, plus préférentiellement égale ou supérieure à 10 MOhms.

Dans l'étape de colmatage **B),** la concentration en silicate de métal alcalin ou de métal alcalinoterreux dans la solution est, de préférence comprise entre 15 et 40 g/L, par exemple égale à 23 g/L.

Dans une autre variante, le colmatage de l'étape **B)** est réalisé dans une eau déionisée ayant une résistivité égale ou supérieure à 0,01 MOhms, de préférence égale ou supérieure à 0,1 Mohms, et plus préférentiellement égale ou supérieure à 10 Mohms).

Dans toutes les variantes et mode de réalisation de l'invention, la température de la solution de colmatage dans l'étape **B),** peut être comprise entre 60°C et 100°C, de préférence entre 97°C et 100°C, par exemple égale à 98°C.

Dans toutes les variantes et mode de réalisation de l'invention, la durée de l'étape de colmatage **B),** est comprise entre 1 et 40 minutes, de préférence entre 15 et 40 minutes, par exemple 30 minutes. Ceci est applicable quand le colmatage est effectué seulement à l'eau sans sel de Silicate tel que décrit juste ci-dessus

Quand le colmatage est réalisé avec sel de silicate, la durée est bien de 15 à 25 minutes, de préférence à 20 minutes.

Conformément à un mode de réalisation de l'invention, après l'étape **A)** et préalablement à l'étape de colmatage au sel de silicate (étape **B)**) une étape d'immersion **A1)** de ladite pièce,
- dans un bain aqueux contenant un sel de chrome trivalent choisi dans le groupe consistant en CrF₃,xH₂O, CrCl₃,xH₂O, Cr(NO₃)₃,xH₂O, (CH₃CO₂)₂Cr,xH₂O, (CH₃CO₂)₇Cr₃(OH)₂,xH₂O, Cr₂(SO₄)₃,xH₂O, CrK(SO₄)₂,xH₂O (étape **A1-1)**) ;
   puis éventuellement
- dans un bain aqueux contenant un composé oxydant choisi dans le groupe consistant en peroxyde d'hydrogène (H₂O₂), fluorure d'ammonium (NH₄F), fluoro-zirconate de potassium (K₂ZrF₆), permanganate de potassium (KMnO₄), permanganate de sodium (NaMnO₄) (étape **A1-2)**) ;
peut avoir lieu.

Le sel de chrome trivalent, peut être, par exemple, l'un des produits commerciaux suivants : Surtec 650 de la société SURTEC, Lanthane 613.3 de la société COVENTYA, TCS de la société SOCOMORE, Bonderite MNT 65000 de la société HENKEL.

Le composé oxydant peut être, par exemple, le produit PACS de la société SOCOMORE.

Dans l'étape d'immersion **A1**), les étapes **A1-1)** et **A1-2)** peuvent avoir lieu successivement dans l'ordre suivant: étape **A1-1)** puis étape **A1-2).** L'étape d'immersion **A1),** peut également être l'étape **A1-1)** seule sans être suivie de l'étape **A1-2).**

La température du bain aqueux contenant le sel de chrome trivalent et celle du bain aqueux contenant le composé oxydant dans l'étape **A1-1)** et **A1-2)** tels que décrits ci-dessus sont comprises entre 20 et 80 °C, de préférence entre 20 et 60°C. Les températures des deux bains peuvent être identiques ou différentes.

La durée d'immersion dans chaque bain de l'étape **A1)** peut être identique ou différente. Elle peut être comprise entre 5 et 40 minutes, de préférence entre 5 et 20 minutes.

Le pH du bain contenant un sel de chrome trivalent peut être compris entre 3 et 4,5, de préférence entre 3 et 4, par exemple égale à 3,5.

La concentration en sel de chrome trivalent, dans le bain est, de préférence, comprise entre 0,5 et 500 g/L.

Le pH du bain contenant un composé oxydant est compris entre 3 et 6.

La concentration en composé oxydant, dans le bain est, de préférence, comprise entre 0,1 et 500 g/L.

Selon un autre mode de réalisation de l'invention, le procédé comporte, en outre, un colmatage hydrothermal final avant l'étape **D)** et après le colmatage selon l'étape **B)** que l'on appellera l'étape **C).** Le colmatage hydrothermal final **C)** est réalisé dans une eau déionisée d'une résistivité égale ou supérieure à 0,01 MOhms, de préférence égale ou supérieure à 0,1 MOhms, et plus préférentiellement égale ou supérieure à 10 MOhms, et à une température supérieure à 96 °C, par exemple, entre 97 et 100°C.

Dans le colmatage hydrothermal final C), la pièce est immergée dans une eau déionisée ayant une résistivité comprise, avantageusement, égale ou supérieure à 10 MOhms. L'immersion de la pièce dans cette étape peut être de 10 à 30 minutes, de préférence de 15 à 25 minutes.

L'étape de marquage **D)** est réalisée par un faisceau laser à fibre qui présentant une ou plusieurs des caractéristiques suivantes
- une longueur d'onde supérieure à 800 nm, par exemple égale à 1064nm,
- une durée d'impulsion comprise entre 0,5 et 10 ns,
- une fréquence du laser comprise entre 400 et 3000 kHz,
- une puissance comprise entre 5 et 80W, par exemple comprise entre 8 à 20W,
- une vitesse comprise entre 1000 et 3000 mm/s,
- une interligne comprise entre 0,0001 et 0,1 mm,
- un temps de marquage compris entre 4 et 200 sec.

Les inventeurs ont constaté que le comportement à la corrosion de la pièce en aluminium et en alliage d'aluminium, après le traitement laser à fibre de l'étape **D),** montre que
(1) un choix astucieux et approprié de paramètres permet de créer des marques de surface contrastées de géométries et topographies différentes ;
(2) un traitement laser ultrarapide et efficace selon l'étape **D)** crée des marques de surface contrastées sans atteindre et/ou modifier la microstructure de la pièce en aluminium ou en alliage d'aluminium.

En effet, le traitement laser de l'étape **D)** permet de réaliser des marques sombres voire noires, donc contrastées et facilement lisibles quel que soit la luminosité, sur les pièces en aluminium ou en alliage d'aluminium.

Le marquage de l'étape **D)** consiste à marquer, avec un rayon laser fibré, une surface anodisée afin de réaliser une inscription sombre et contrastée dans la couche sans percer la couche anodique. Ce marquage peut être considéré comme un procédé d'usinage laser permettant de créer un marquage extrêmement sombre et contrasté sur une surface, sans enlèvement de matière. Des impulsions laser extrêmement courtes créent des structures à l'échelle nanométrique sur la surface. Cette surface microstructurée réduit la diffusion de la lumière, et le marquage ainsi créé présente un noircissement d'une profondeur et d'une stabilité durable.

Par un choix astucieux de paramètres, l'étape **D)** permet de ne pas impacter la pièce et de contenir les marques dans l'épaisseur de la couche d'oxyde. Contrairement aux procédés de marquage actuellement connus et utilisés, la pièce marquée dans les conditions de l'étape **D)** ne nécessite pas de traitement post-marquage (par conversion chimique, par exemple) pour être protégée contre la corrosion et la biocorrosion étant donné que le marquage est contenu dans la couche anodique sans avoir atteint le substrat aluminium (sous-jacent). La tenue à la biocorrosion et à la corrosion notamment aux expositions salines et aux brouillards salins de la pièce marquée est ainsi améliorée par rapport à une autre technique de gravage/marquage.

L'étape de marquage **D)** peut être réalisée par tout type de laser à fibre, pouvant présenter les caractéristiques susmentionnées.

Dans le cas d'un laser à fibre, le milieu amplificateur est une fibre optique dopée avec des éléments de terres rares tels que le samarium, l'erbium, l'ytterbium, le néodyme, le dysprosium, le praséodyme, le thulium et l'holmium. La longueur d'onde obtenue dépend de l'élément choisi. Quelques longueurs d'onde sont indiquées à titre d'exemples pour quelques éléments : samarium 0,6 µm ; ytterbium 1,05 µm ; erbium 1,55 µm ; thulium 1,94 µm ; holmium 2,1 µm.

Le point créé par le faisceau laser à fibre est petit, limitant ainsi la quantité d'énergie qui est convertie en énergie thermique. Cela signifie que la surface traitée est à l'abri des dommages qui peuvent être causés par la chaleur ou des fractures.

Un autre avantage est que les lasers à fibre sont économes en énergie.

Dans un mode de réalisation de l'invention, le laser à fibre est un système dans lequel le milieu amplificateur est une fibre optique dopée avec l'ytterbium.

Dans un mode de réalisation préféré, le marquage de l'étape **D)** est réalisé avec un laser à fibre qui est un laser amplificateur de puissance à oscillateur principal ou MOPA (Master Oscillator Power Amplifier en anglais). A titre d'exemples de ce type de laser, on peut citer le laser TF 420 du fabriquant TECHNIFOR, ou le laser SpeedMarker 700 de la société TROTEC.

Comme déjà indiqué, le marquage de l'étape **D)** est réalisé dans l'épaisseur de la couche d'oxydes/hydroxydes d'aluminium sans enlever de la matière et sans atteindre la pièce elle-même. Ainsi, le marquage laser de l'étape **D)** est réalisé sur une épaisseur de couche d'oxydes/hydroxydes d'aluminium d'au moins 3µm, par exemple, d'au moins 4µm, par exemple, sur une épaisseur comprise entre 4 et 6µm. De préférence, le marquage laser de l'étape **D)** est réalisé sur une épaisseur de couche d'oxydes/hydroxydes d'aluminium est d'environ 5µm.

L'étape **D)** peut être réalisée avec un laser à fibre à une longueur d'onde supérieure à 800 nm, par exemple égale à 1064nm.

La durée d'impulsion laser peut être comprise entre 0,5 et 10 ns, de préférence entre 1 et 7 ns, plus préférentiellement entre 1 et 4 ns.

La fréquence du laser peut être comprise entre 400 et 3000 kHz.

La puissance du laser à fibre est comprise entre 5 et 80W, par exemple comprise entre 8 à 20W.

La vitesse du faisceau laser à fibre peut être comprise entre 1000 et 3000 mm/s. L'interligne peut être comprise entre 0,0001 et 0,1 mm.

Le temps de marquage à l'étape **D)** peut être compris entre 4 et 200 sec.

Le faisceau laser est pulsé et libère de l'énergie à des intervalles spécifiques. La vitesse et l'interligne, sont les deux paramètres qui déterminent la distance entre deux impulsions.

Dans un mode de réalisation de l'invention, le procédé de marquage de surface d'une pièce en aluminium ou en alliage d'aluminium, comporte les étapes suivantes :
**A)** une étape d'anodisation au cours de laquelle ladite pièce est immergée dans un bain aqueux comportant de l'acide sulfurique à une concentration comprise entre 150 et 250 g/L et à une température comprise entre 14 et 21°C, et
   une tension continue est appliquée à ladite pièce immergée selon un profil de tension comportant une montée en tension à une vitesse inférieure à 1 V/min jusqu'à atteindre une valeur de tension dite de plateau comprise entre 5 et 13 V; et
**B)** une étape de colmatage de la couche anodique formée sur ladite pièce à l'issue de l'étape **A)**
   le colmatage étant réalisé
   dans une solution aqueuse d'eau déionisée ayant une résistivité égale ou supérieure à 0,01 MOhms, de préférence égale ou supérieure à 0,1 MOhms, plus préférentiellement égale ou supérieure à 10 MOhms, et de 1 à 500g/L d'un silicate de métal alcalin ou de métal alcalinoterreux, à une température comprise entre 60°C et 100°C,
      ou
   dans de l'eau déionisée ayant une résistivité égale ou supérieure à 0,01 MOhms, de préférence égale ou supérieure à 0,1 MOhms, plus préférentiellement égale ou supérieure à 10 MOhms, à une température comprise entre 60°C et 100°C ; et
**D)** une étape de marquage par laser à fibre présentant une ou plusieurs des caractéristiques suivantes
   - une longueur d'onde supérieure à 800 nm, par exemple égale à 1064nm,
   - une durée d'impulsion comprise entre 0,5 et 10 ns,
   - une fréquence du laser comprise entre 400 et 3000 kHz,
   - une puissance comprise entre 5 et 80W, par exemple comprise entre 8 à 20W,
   - une vitesse comprise entre 1000 et 3000 mm/s,
   - une interligne comprise entre 0,0001 et 0,1 mm,
   - un temps de marquage compris entre 4 et 200 sec.

Dans un autre mode de réalisation de l'invention, le procédé de marquage de surface d'une pièce en aluminium ou en alliage d'aluminium, comporte les étapes suivantes :
**A)** une étape d'anodisation au cours de laquelle ladite pièce est immergée dans un bain aqueux comportant de l'acide sulfurique à une concentration comprise entre 150 et 250 g/L et à une température comprise entre 14 et 21 °C, et
   une tension continue est appliquée à ladite pièce immergée selon un profil de tension comportant une montée en tension à une vitesse inférieure à 1 V/min jusqu'à atteindre une valeur de tension dite de plateau comprise entre 5 et 13 V;
**A1)** une étape d'immersion de ladite pièce,
   - dans un bain aqueux contenant un sel de chrome trivalent choisi dans le groupe consistant en CrF₃,xH₂O, CrCl₃,xH₂O, Cr(NO₃)₃,xH₂O, (CH₃CO₂)₂Cr,xH₂O, (CH₃CO₂)₇Cr₃(OH)₂,xH₂O, Cr₂(SO₄)₃,xH₂O, CrK(SO₄)₂,xH₂O (étape A1-1)) ;
      puis (optionnel)
   - dans un bain aqueux contenant un composé oxydant choisi dans le groupe consistant en peroxyde d'hydrogène (H₂O₂), fluorure d'ammonium (NH₄F), fluoro-zirconate de potassium (K₂ZrF₆), permanganate de potassium (KMnO₄), permanganate de sodium (NaMnO₄) (étape **A1-2)**) ; et
**B)** une étape de colmatage de la couche anodique formée sur ladite pièce à l'issue de l'étape **A)**
   le colmatage étant réalisé
   dans une solution aqueuse d'eau déionisée ayant une résistivité égale ou supérieure à 0,01 MOhms, de préférence égale ou supérieure à 0,1 MOhms, plus préférentiellement égale ou supérieure à 10 MOhms, et de 1 à 500g/L d'un silicate de métal alcalin ou de métal alcalinoterreux, à une température comprise entre 60°C et 100°C,
      ou
   dans de l'eau déionisée ayant une résistivité égale ou supérieure à 0,01 MOhms, de préférence égale ou supérieure à 0,1 MOhms, plus préférentiellement égale ou supérieure à 10 MOhms, à une température comprise entre 60°C et 100°C ; et
**D)** une étape de marquage par laser à fibre présentant une ou plusieurs des caractéristiques suivantes
   - une longueur d'onde supérieure à 800 nm, par exemple égale à 1064nm,
   - une durée d'impulsion comprise entre 0,5 et 10 ns,
   - une fréquence du laser comprise entre 400 et 3000 kHz,
   - une puissance comprise entre 5 et 80W, par exemple comprise entre 8 à 20W,
   - une vitesse comprise entre 1000 et 3000 mm/s,
   - une interligne comprise entre 0,0001 et 0,1 mm,
   - un temps de marquage compris entre 4 et 200 sec.

Dans un autre mode de réalisation de l'invention, le procédé de marquage de surface d'une pièce en aluminium ou en alliage d'aluminium, comporte les étapes suivantes :
**A)** une étape d'anodisation au cours de laquelle ladite pièce est immergée dans un bain aqueux comportant de l'acide sulfurique à une concentration comprise entre 150 et 250 g/L et à une température comprise entre 14 et 21 °C, et
   une tension continue est appliquée à ladite pièce immergée selon un profil de tension comportant une montée en tension à une vitesse inférieure à 1 V/min jusqu'à atteindre une valeur de tension dite de plateau comprise entre 5 et 13 V;
**A1)** une étape d'immersion de ladite pièce,
   - dans un bain aqueux contenant un sel de chrome trivalent choisi dans le groupe consistant en CrF₃,xH₂O, CrCl₃,xH₂O, Cr(NO₃)₃,xH₂O, (CH₃CO₂)₂Cr,xH₂O, (CH₃CO₂)₇Cr₃(OH)₂,xH₂O, Cr₂(SO₄)₃,xH₂O, CrK(SO₄)₂,xH₂O (étape **A1-1)**) ;
      puis (optionnel)
   - dans un bain aqueux contenant un composé oxydant choisi dans le groupe consistant en peroxyde d'hydrogène (H₂O₂), fluorure d'ammonium (NH₄F), fluoro-zirconate de potassium (K₂ZrF₆), permanganate de potassium (KMnO₄), permanganate de sodium (NaMnO₄) (étape **A1-2)**) ;
**B)** une étape de colmatage de la couche anodique formée sur ladite pièce à l'issue de l'étape **A)**
   le colmatage étant réalisé
   dans une solution aqueuse d'eau déionisée ayant une résistivité égale ou supérieure à 0,01 MOhms, de préférence égale ou supérieure à 0,1 MOhms, plus préférentiellement égale ou supérieure à 10 MOhms, et de 1 à 500g/L d'un silicate de métal alcalin ou de métal alcalinoterreux, à une température comprise entre 60°C et 100°C,
      ou
   dans de l'eau déionisée ayant une résistivité égale ou supérieure à 0,01 MOhms, de préférence égale ou supérieure à 0,1 MOhms, plus préférentiellement égale ou supérieure à 10 MOhms, à une température comprise entre 60°C et 100°C ; et
**C)** un colmatage hydrothermal final dans une eau déionisée d'une résistivité égale ou supérieure à 0,01 MOhms, de préférence égale ou supérieure à 0,1 MOhms, et plus préférentiellement égale ou supérieure à 10 MOhms, à une température entre 97 et 100°C ; et
**D)** une étape de marquage par laser à fibre présentant une ou plusieurs des caractéristiques suivantes
   - une longueur d'onde supérieure à 800 nm, par exemple égale à 1064nm,
   - une durée d'impulsion comprise entre 0,5 et 10 ns,
   - une fréquence du laser comprise entre 400 et 3000 kHz,
   - une puissance comprise entre 5 et 80W, par exemple comprise entre 8 à 20W,
   - une vitesse comprise entre 1000 et 3000 mm/s,
   - une interligne comprise entre 0,0001 et 0,1 mm,
   - un temps de marquage compris entre 4 et 200 sec.

Dans un autre mode de réalisation de l'invention, le procédé de marquage de surface d'une pièce en aluminium ou en alliage d'aluminium, comporte les étapes suivantes :
**A)** une étape d'anodisation au cours de laquelle ladite pièce est immergée dans un bain aqueux comportant de l'acide sulfurique à une concentration comprise entre 150 et 250 g/L et à une température comprise entre 14 et 21 °C, et
   une tension continue est appliquée à ladite pièce immergée selon un profil de tension comportant une montée en tension à une vitesse inférieure à 1 V/min jusqu'à atteindre une valeur de tension dite de plateau comprise entre 5 et 13 V;
**A1)** une étape d'immersion de ladite pièce,
   - dans un bain aqueux contenant un sel de chrome trivalent choisi dans le groupe consistant en CrF₃,xH₂O, CrCl₃,xH₂O, Cr(NO₃)₃,xH₂O, (CH₃CO₂)₂Cr,xH₂O, (CH₃CO₂)₇Cr₃(OH)₂,xH₂O, Cr₂(SO₄)₃,xH₂O, CrK(SO₄)₂,xH₂O (étape **A1-1)**) ; et
**B)** une étape de colmatage de la couche anodique formée sur ladite pièce à l'issue de l'étape **A)**
   le colmatage étant réalisé
   dans une solution aqueuse d'eau déionisée ayant une résistivité égale ou supérieure à 0,01 MOhms, de préférence égale ou supérieure à 0,1 MOhms, plus préférentiellement égale ou supérieure à 10 MOhms, et de 1 à 500g/L d'un silicate de métal alcalin ou de métal alcalinoterreux, à une température comprise entre 60°C et 100°C,
      ou
   dans de l'eau déionisée ayant une résistivité égale ou supérieure à 0,01 MOhms, de préférence égale ou supérieure à 0,1 MOhms, plus préférentiellement égale ou supérieure à 10 MOhms, à une température comprise entre 60°C et 100°C ; et
**D)** une étape de marquage par laser à fibre présentant une ou plusieurs des caractéristiques suivantes
   - une longueur d'onde supérieure à 800 nm, par exemple égale à 1064nm,
   - une durée d'impulsion comprise entre 0,5 et 10 ns,
   - une fréquence du laser comprise entre 400 et 3000 kHz,
   - une puissance comprise entre 5 et 80W, par exemple comprise entre 8 à 20W,
   - une vitesse comprise entre 1000 et 3000 mm/s,
   - une interligne comprise entre 0,0001 et 0,1 mm,
   - un temps de marquage compris entre 4 et 200 sec.

Dans un autre mode de réalisation de l'invention, le procédé de marquage de surface d'une pièce en aluminium ou en alliage d'aluminium, comporte les étapes suivantes :
**A)** une étape d'anodisation au cours de laquelle ladite pièce est immergée dans un bain aqueux comportant de l'acide sulfurique à une concentration comprise entre 150 et 250 g/L et à une température comprise entre 14 et 21 °C, et
   une tension continue est appliquée à ladite pièce immergée selon un profil de tension comportant une montée en tension à une vitesse inférieure à 1 V/min jusqu'à atteindre une valeur de tension dite de plateau comprise entre 5 et 13 V;
**Im**) une étape d'imprégnation de ladite pièce anodisée à l'issue de l'étape **A)** dans un bain de colorants organiques ou minéraux, puis éventuellement
**A1)** une étape d'immersion de ladite pièce,
   - dans un bain aqueux contenant un sel de chrome trivalent choisi dans le groupe consistant en CrF₃,xH₂O, CrCl₃,xH₂O, Cr(NO₃)₃,xH₂O, (CH₃CO₂)₂Cr,xH₂O, (CH₃CO₂)₇Cr₃(OH)₂,xH₂O, Cr₂(SO₄)₃,xH₂O, CrK(SO₄)₂,xH₂O (étape **A1-1)**) ;
      puis (optionnel)
   - dans un bain aqueux contenant un composé oxydant choisi dans le groupe consistant en peroxyde d'hydrogène (H₂O₂), fluorure d'ammonium (NH₄F), fluoro-zirconate de potassium (K₂ZrF₆), permanganate de potassium (KMnO₄), permanganate de sodium (NaMnO₄) (étape **A1-2)**) ; et puis éventuellement
**B)** une étape de colmatage de la couche anodique formée sur ladite pièce à l'issue de l'étape **A)**
   le colmatage étant réalisé
   dans une solution aqueuse d'eau déionisée ayant une résistivité égale ou supérieure à 0,01 MOhms, de préférence égale ou supérieure à 0,1 MOhms, plus préférentiellement égale ou supérieure à 10 MOhms, et de 1 à 500g/L d'un silicate de métal alcalin ou de métal alcalinoterreux, à une température comprise entre 60°C et 100°C,
      ou
   dans de l'eau déionisée ayant une résistivité égale ou supérieure à 0,01 MOhms, de préférence égale ou supérieure à 0,1 MOhms, plus préférentiellement égale ou supérieure à 10 MOhms, à une température comprise entre 60°C et 100°C ; et
**D)** une étape de marquage par laser à fibre présentant une ou plusieurs des caractéristiques suivantes
   - une longueur d'onde supérieure à 800 nm, par exemple égale à 1064nm,
   - une durée d'impulsion comprise entre 0,5 et 10 ns,
   - une fréquence du laser comprise entre 400 et 3000 kHz,
   - une puissance comprise entre 5 et 80W, par exemple comprise entre 8 à 20W,
   - une vitesse comprise entre 1000 et 3000 mm/s,
   - une interligne comprise entre 0,0001 et 0,1 mm,
   - un temps de marquage compris entre 4 et 200 sec.

L'étape **Im),** qui intervient après l'étape **A),** peut se réaliser par toute technique connue de l'homme du métier. Par exemple, elle peut se réaliser dans un bain de colorant adapté au traitement de surface disponible auprès de société comme Clariant. A titre d'exemple, on peut citer le colorant organique Bleu Sanodal (de la société Clariant) avec une concentration 3g/L auquel il faut ajouter 2g/L d'acétate de sodium, pH compris entre 5 et 6 à une température comprise entre 40 et 65°C, de préférence égale à 50°C, pour une durée comprise en 5 et 35min, de préférence égale à 20 minutes. Le principe actif du colorant organique est la molécule d'Anthraquinone.

Dans tous les modes de réalisation, avant de soumettre la pièce au procédé de traitement de surface de l'invention et donc préalablement à l'étape d'anodisation **A),** la pièce peut être soumise à une étape de préparation de surface par dégraissage et/ou de décapage afin d'éliminer les graisses, salissures et oxydes présents sur sa surface.

Cette étape préalable de préparation de surface peut comporter une ou plusieurs des opérations suivantes :
- dégraissage au solvant, pour dissoudre des graisses présentes à la surface de la pièce. Cette opération peut être réalisée par trempage, aspersion, ou tout autre méthode connue de l'homme du métier ;
- dégraissage alcalin, pour dissoudre des graisses présentes à la surface de la pièce. Cette opération peut être réalisée par trempage, aspersion, ou toute autre technique connue de l'homme du métier ;
- décapage alcalin, pour dissoudre les oxydes naturellement formés à la surface de la pièce. Cette opération peut être réalisée par trempage, aspersion, ou toute autre technique connue de l'homme du métier. A l'issue de cette opération, la pièce est recouverte d'une couche pulvérulente formée de produits d'oxydation des composés intermétalliques, qu'il convient d'éliminer par une étape de décapage acide ;
- décapage acide, pour dissoudre les oxydes naturellement formés à la surface de la pièce, et/ou la couche d'oxydation formée à la surface de la pièce lors de l'étape de décapage alcalin. Cette opération peut être réalisée par trempage, aspersion, ou toute autre technique connue de l'homme du métier.

Ces étapes sont décrites en détails, par exemple dans la demande WO 2013/117759. Des rinçages intermédiaires, notamment à l'eau déminéralisée, sont, de préférence réalisés entre les étapes successives ci-dessus, et avant le traitement de la pièce par anodisation.

Le procédé de l'invention présente un grand intérêt dans tout type d'industrie où un marquage contrasté de pièces en aluminium ou en alliage d'aluminium avec une bonne tenue des pièces à la corrosion, à la biocorrosion, aux brouillards salins et aux expositions salines est recherché.

Une fois le marquage réalisé (sans post-traitement physico-chimique) sur une pièce en aluminium ou en alliage d'aluminium, comme par exemple l'alliage 2024T3, utilisant le procédé de l'invention,
- si la pièce est soumise à un essai de brouillard salin (168 heures d'exposition suivant l'ISO9227), aucune corrosion n'est constatée à l'issue du test tout en garantissant une lisibilité et une visibilité du marquage, et
- si la pièce est soumise à un essai de biocorrosion de 15 jours d'immersion suivant § 4.7.19 de la norme MIL-C-27725B, le marquage n'est pas corrodé à l'issue du test tout en garantissant une lisibilité et une visibilité du marquage. A noter que la tenue en biocorrosion est seulement garantie lorsque les gammes et variantes associées contiennent a minima l'étape de colmatage avec un sel de Silicate tel que décrit plus haut

Il est à noter qu'un marquage laser contrasté ou non qui aurait atteint la pièce (perçage de la couche d'oxydes) en aluminium ou en alliage d'aluminium, comme par exemple l'alliage 2024T3, sans post-traitement physico-chimique, montrerait des signes de corrosion avant l'exigence des 168 heures d'exposition saline suivant l'ISO9227.

L'un des avantages du marquage par le procédé de l'invention est sa stabilité visuelle quel que soit l'angle d'observation. Le contraste très marqué et uniforme sous tous les angles est dû aux nanostructures périodiques, qui réfléchissent et absorbent la lumière en la diffusant au maximum. Cette caractéristique représente notamment un gage de qualité dans l'horlogerie ou l'industrie automobile, qui mettent en œuvre de nombreuses pièces apparentes.

Le marquage sombre et contrasté obtenu par le procédé de l'invention améliore considérablement la visibilité et la lisibilité manuelle et automatique des détails de marquage.

Par ailleurs, le procédé de marquage de l'invention convient aux marquages petits et fins, ou pour les codes DMC (Data Matrix Code en anglais) et UDI (Unique Device Identification en anglais) sur des surfaces réduites.

Par exemple, le règlement européen sur les dispositifs médicaux et la réglementation de la FDA (Food and Drug Administration) aux Etats-Unis exigent que les produits de technologie médicale soient dotés d'un code UDI (Unique Device Identification) qui garantisse leur traçabilité et qui reste durablement lisible. Le marquage par le procédé de l'invention le prédispose admirablement aux exigences du marquage compatible UDI. Les codes UDI, notamment de très petites dimensions, restent ainsi durablement lisibles grâce à leur résistance à la corrosion, à leur stabilité sous tous les angles d'observation ainsi qu'à leur teinte contrastée voire noir profond.

Un autre objet de l'invention concerne l'utilisation d'un procédé de marquage selon l'invention pour la fabrication ou le marquage de pièces en aluminium ou en alliage d'aluminium destinées aux secteurs aéronautique, aérospatial, automobile, ferroviaire, horlogerie, médical, nucléaire, pétrolier, etc.

### EXEMPLES

### Exemple 1 :

### Procédé de marquage de surface de pièce en alliage d'aluminium

Des pièces en alliage d'aluminium 2024 T3 et AS7G06T6 laminé usinée sur une des deux faces de dimensions 120x60x2 mm sont traitées suivant les méthodes décrites ci-après.

Des étapes de préparation de surface de la pièce sont tout d'abord réalisées successivement :
- dégraissage alcalin, par trempage de la pièce dans un bain de ALUMAL CLEAN 101 (de la société COVENTYA) à une température de 60°C, pendant 20 minutes ;
- rinçage à l'eau du robinet ou à l'eau déminéralisée ;
- décapage acide : par trempage de la pièce dans une solution d'ALUMAL DEOX 411 (de la société COVENTYA) ;
- rinçage à l'eau du robinet ou à l'eau déminéralisée.

Les pièces décapées et rincées sont ensuite soumises à un procédé d'anodisation conforme à l'invention, au cours de laquelle les pièces sont immergées dans un bain aqueux comportant de l'acide sulfurique à une concentration comprise entre 160 g/L et 220 g/L, par exemple égale à 190 g/L. Ce bain est porté et maintenu à une température de 18°C. Une tension continue est appliquée aux pièces immergées selon le profil de tension suivant : montée en tension depuis une valeur de 0V, à une vitesse de 0,7 V/min jusqu'à atteindre une valeur de tension dite de plateau de 10V. La tension est maintenue à la valeur de plateau pendant 40 minutes. Il se forme en surface des pièces une couche anodique d'épaisseur de 3 à 6µm.

A titre d'exemples comparatifs, des pièces identiques ayant été soumises aux mêmes opérations de préparation de surface sont anodisées selon les méthodes conventionnelles d'anodisation chromique (OAC) et d'anodisation sulfurique fine (OAS fine). Les conditions opératoires pour ces anodisations sont indiquées dans le [Tableau 1].

**[Tableau 1]**

| | **OAC** | **OAS fine** |
|---|---|---|
| **Composition du bain** | CrO₃ (60 g/L) | H₂SO₄ |
| | C₂H₂O₄ (2 g/L) | |
| **Température du bain (°C)** | 35-42 | 16-20 |
| **Montée en tension (V/min)** | 7 | 0,7 |
| **Tension et temps de plateau** | 35 V | 10V |
| | 45 minutes | 40 minutes |
| **Epaisseur de la couche anodique formée sur la pièce (µm)** | 3 à 5 | 3 à 6 |

L'épaisseur de la couche anodique formée sur la pièce est mesurée par courant de Foucault suivant la norme ISO2360.

Les pièces anodisées sont alors soumises à un ou plusieurs rinçages, de préférence à l'eau déminéralisée, puis aux opérations de colmatage conforme à l'invention dans des conditions et dans l'ordre indiqués ci-dessous :
- étape **A1.1)** et étape **A1.2)** : une étape d'immersion desdites pièces, successivement, dans un bain aqueux contenant 29%Vol/Vol de sel de Chrome trivalent (sulfate de potassium de Chrome III de formule chimique KCr(SO₄)₂, à une température de 40°C pendant 20 minutes et à un pH de 3,9, puis
   dans un bain aqueux contenant 7 %Vol/Vol de H₂O₂, à une température de 25°C pendant 5 minutes et à un pH de 4,2 ;

- étape **B) :** un colmatage par immersion des pièces à l'issue des deux opérations précédentes dans une solution aqueuse d'eau déionisée de montage ayant une résistivité de 10 MOhms avec 23g/L d'un silicate de sodium, une température de 98 °C et pendant 20 minutes.

Entre chaque étape de colmatage un rinçage à l'eau déminéralisée est effectué pendant 1 minute, à une température d'environ 20°C.

L'étape de marquage **D)** non perçant (sans atteinte de la pièce) par un faisceau laser à fibre MOPA a été effectuée avec un laser SpeedMarker 700 du fabriquant TROTEC dans les conditions précisées dans [Tableau 2] :

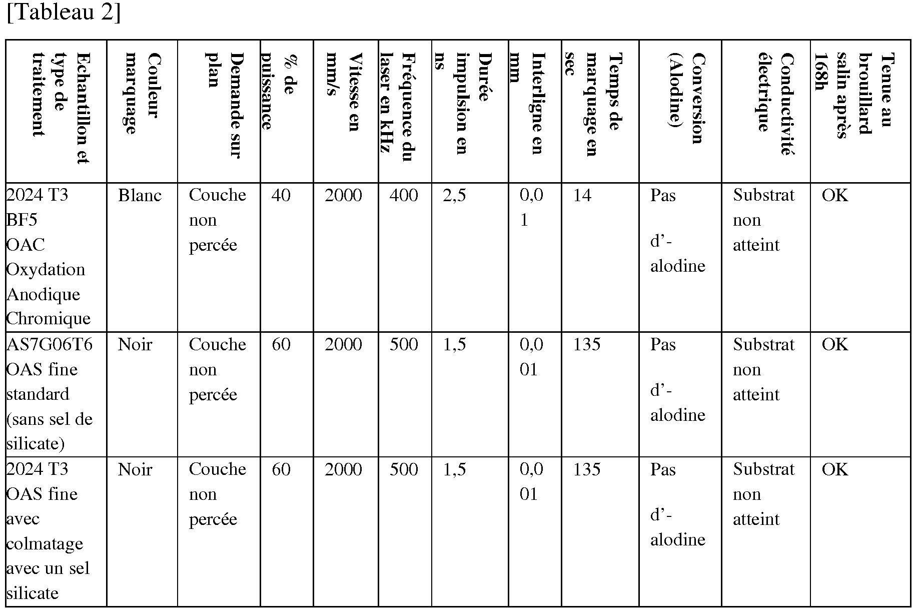

La conversion Alodine désigne une conversion chimique type Alodine 1200 qui est un procédé exclusivement chimique pour la protection de longue durée contre l'oxydation des surfaces d'aluminium ou de ses alliages. Le traitement d'Alodine 1200 a été mis au point pour la protection des surfaces ne devant pas recevoir, ou ne recevoir que localement, une finition par peinture (tenue Brouillard Salin >168 heures).

Il assure une adhérence maximale et une excellente tenue dans le temps des finitions appliquées, en raison de la parfaite stabilité chimique conférée aux surfaces traitées.

L'Alodine 1200, utilisée au trempé, forme pratiquement sans surépaisseur, un revêtement protecteur sur l'aluminium ou les alliages. La coloration de ce revêtement, selon le type d'alliage ou le degré de pureté du métal, varie du jaune au marron. L'Alodine 1200 est homologuée selon la norme MIL C 5541.

### Tenue à la biocorrosion

A l'issue de ces opérations, une couche anodique colmatée et marquée est obtenue sur chaque pièce traitée. Une fois traitée, les pièces sont soumises à l'essai d'immersion dans un milieu représentatif de la biocorrosion qui suit le protocole du § 4.7.19 de la norme MIL-27725B. Le schéma du montage pour réaliser l'essai de biocorrosion suivant le § 4.7.19 de la norme MIL-C-27725B avec les différentes pièces est représenté en Figure 1.

L'évaluation des résultats se fait visuellement en retirant les pièces du milieu afin de constater la visibilité et la lisibilité du marquage et d'éventuels signes de dégradations du traitement et/ou d'attaques du substrat par le milieu (phase inférieure). La dégradation visuelle peut être confirmée par une mesure de résistivité Ohmique de couche qui, quand elle n'est pas infinie, met en évidence une détérioration de la couche qui peut aller jusqu'au substrat.

Avant les essais, la méthode de résistivité Ohmique est utile pour anticiper le fait que si le courant électrique passe en deux points du gravage, alors la tenue à la biocorrosion ne sera pas satisfaite. A contrario, il n'y a pas d'exigence après essais de biocorrosion à partir du moment où il n'y a pas d'attaque sur le marquage.

Cette méthode est faite systématique après un essai de biocorrosion sur les éventuelles indications de corrosion potentielles et ce uniquement à l'issue des 15 jours d'essais de biocorrosion.

Méthode de mesure d'une résistance avec un Ohmmètre :
Un multimètre peut servir à mesurer une résistance. Il doit alors être utilisé en mode Ohmmètre.

Utilisation du multimètre en mode Ohmmètre :
Choix des bornes : la borne COM et la borne portant le symbole Ω.

Branchement : le multimètre est relié directement en deux points de l'éprouvette à l'issue de l'essai sur la zone qui a été en contact avec la phase inférieure du milieu biphasique.

Le calibre : le calibre le plus élevé est choisi puis celui-ci est diminué jusqu'à trouver le plus petit des calibres supérieurs à la valeur mesurée.

Le [Tableau 3] récapitule les résultats d'essais de tenue à la biocorrosion de différents traitements de surface en fonction du nombre de jours d'immersion dans le milieu biphasique.

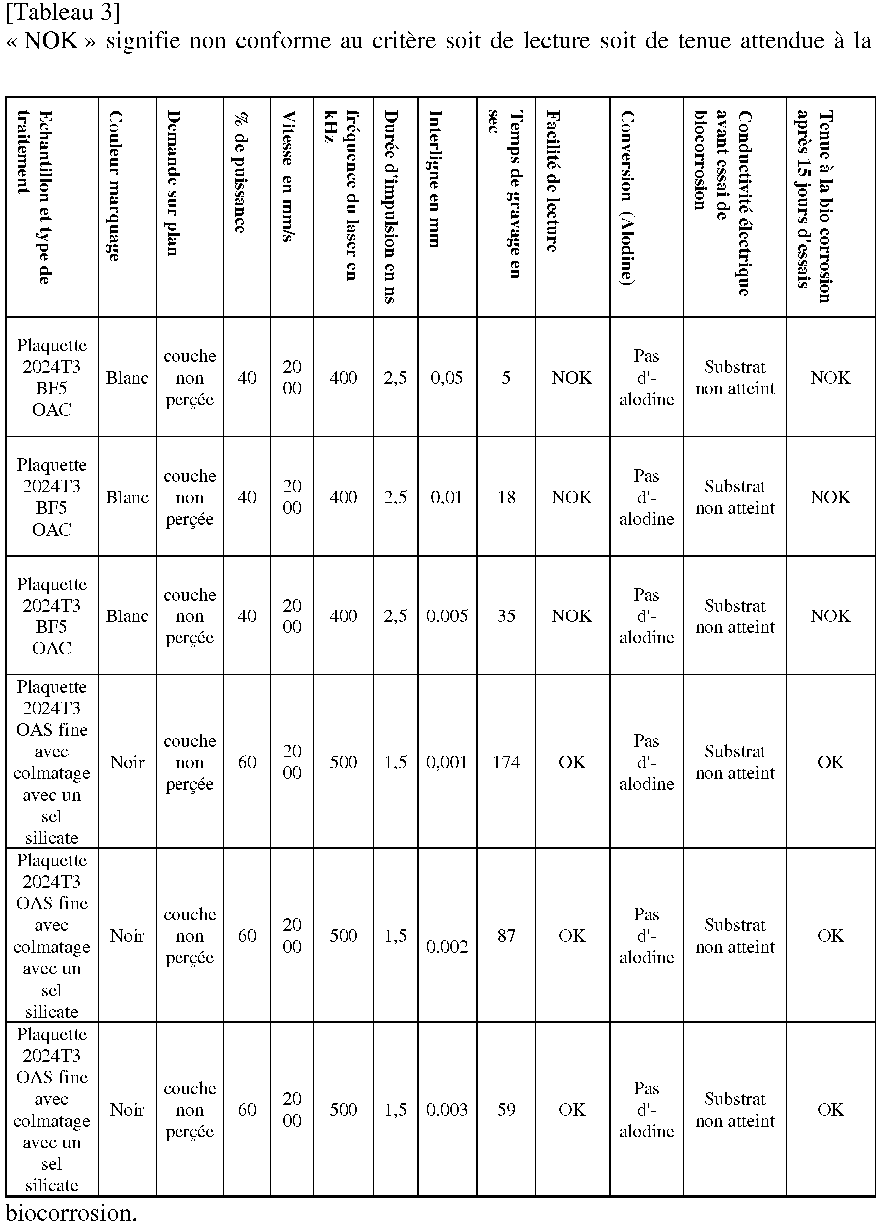

La corrosion par piqûres (ou pits en anglais) est une corrosion localisée qui se traduit par la formation, à la surface de la pièce en alliage d'aluminium, de cavités aux formes irrégulières. Elles se produisent quand la pièce en alliage d'aluminium est mise en contact avec une solution aqueuse contenant des ions halogénures, le plus fréquemment des ions chlorures. Sur la base des résultats indiqués dans le [Tableau 3], il apparaît clairement que la tenue 168 heures suivant l'ISO9227 est bonne pour les trois échantillons. Aucune corrosion n'est constatée à l'issue du test tout et les marquages restent lisibles.

Différents essais de marquage noirs ont été réalisés sur différents substrats (2024T3 et AS7G06T6) certains sont restés dans la couche et n'ont pas atteint le substrat, d'autres ont atteint le substrat. Ce dernier cas était détectable par une mesure de passage de courant en deux points de ce marquage (si le courant passe, la couche a été percée totalement).

### 1) Eprouvette OAS fine par Oxydation Anodique Sulfurique (telle que décrite plus haut et/ou suivant la demande de brevet n° FR3106837), après marquage et avant exposition au brouillard salin suivant ISO9227

Pour une éprouvette en alliage 2024 T3 (OAS fine avec colmatage avec un sel silicate) et pour une éprouvette en alliage AS7G06T6 (OAS fine standard-sans sel de silicate), les marquages sont intacts et lisibles.

### 2) Eprouvette OAS fine par Oxydation Anodique Sulfurique (telle que décrite plus haut et/ou suivant la demande de brevet n° FR3106837), après marquage et après 168 heures d'exposition au brouillard salin suivant ISO9227

Pour une éprouvette en alliage 2024 T3 (OAS fine avec colmatage avec un sel silicate), il n'y a pas de corrosion détectée sur les marquages (marquages isolants électrique avant essai) après exposition au brouillard salin. Les marquages sont intacts et restent lisibles. Pour une éprouvette en alliage AS7G06T6 (OAS fine standard-sans sel de silicate), il n'y a pas de corrosion détectée sur les marquages (marquages isolants électrique avant essai) après exposition au brouillard salin. Les marquages sont intacts et restent lisibles. Par contre, une corrosion importante est détectée sur les autres marquages (qui étaient tous conducteur électrique avant essai signe que le marquage laser avait percé la couche anodique et atteint le substrat).

### 3) Eprouvette OAS fine par Oxydation Anodique Sulfurique (telle que décrite plus haut et/ou suivant la demande de brevet n° FR3106837), après essai de biocorrosion de 15 jours d'immersion suivant § 4.7.19 de la norme MIL-C-27725B

Pour une éprouvette en alliage 2024 T3 (OAS fine avec colmatage avec un sel silicate), et pour une éprouvette en alliage AS7G06T6 (OAS fine standard-sans sel de silicate), il n'y a pas de corrosion détectée sur les marquages après 15 jours d'immersion suivant § 4.7.19 de la norme MIL-C-27725B. Les marquages sont intacts et restent contrastés et lisibles.

Ces essais montrent bien que les buts recherchés, à savoir,
- réaliser un marquage contrasté pour faciliter la visibilité et la lisibilité et la lecture dudit marquage,
- supprimer l'obligation de réaliser une conversion chimique post marquage, par exemple, avec de la Bonderite MCR 1200),
- obtenir un marquage laser contrasté qui résiste au brouillard salin neutre suivant ISO9227 sur un minimum de 168h,
- obtenir un marquage laser contrasté qui résiste à la biocorrosion après 15 jours d'immersion suivant § 4.7.19 de la norme MIL-C-27725B,
ont été atteints par les pièces traitées selon le procédé de l'invention.

Les exigences aéronautiques de tenue au brouillard salin (168h d'exposition suivant l'ISO 9227) et de tenue à la biocorrosion après 15 jours d'immersion suivant § 4.7.19 de la norme MIL-C-27725B, sont également satisfaites par le procédé de marquage de l'invention.

En conclusion, le procédé de marquage de pièces en aluminium ou en alliage d'aluminium selon l'invention permet une lecture facile des marques avec un lecteur de code numérique. Le marquage desdites pièces présentent une tenue conforme en corrosion saline sans obligation de réaliser une post conversion chimique, et une tenue conforme en biocorrosion.

Le procédé de marquage selon l'invention présente donc un grand intérêt dans l'ensemble des secteurs ayant recours au datamatrix ou marquage nécessitant un minimum de contraste pour faciliter la lecture et des tenues en (bio)corrosion, comme par exemple, les équipements de l'aéronautique et du spatial en général, du nucléaire, de l'offshore (pétrolier), de l'automobile, le ferroviaire, etc.

## Revendications

1. Procédé de marquage de surface d'une pièce en aluminium ou en alliage d'aluminium, comportant au moins les étapes suivantes :
**A)** une étape d'anodisation ;
**B)** une étape-de colmatage de la couche anodique formée sur ladite pièce à l'issue de l'étape **A),**
le colmatage étant réalisé
dans une solution aqueuse d'eau déionisée ayant une résistivité égale ou supérieure à 0,01 MOhms, et de 1 à 500g/L d'un silicate de métal alcalin ou de métal alcalinoterreux, à une température comprise entre 60°C et 100°C,
ou
dans de l'eau déionisée ayant une résistivité égale ou supérieure à 0,01 MOhms, à une température comprise entre 60°C et 100°C ;
**D)** une étape de marquage par un faisceau laser à fibre présentant une ou plusieurs des caractéristiques suivantes
- une longueur d'onde supérieure à 800 nm,
- une durée d'impulsion comprise entre 0,5 et 10 ns,
- une fréquence du laser comprise entre 400 et 3000 kHz,
- une puissance comprise entre 5 et 80W,
- une vitesse comprise entre 1000 et 3000 mm/s,
- une interligne comprise entre 0,0001 et 0,1 mm,
- un temps de marquage compris entre 4 et 200 sec.

2. Procédé selon la revendication 1, **caractérisé en ce que** l'étape **A)** est une anodisation du type TSA (oxydation anodique sulfo-tartrique), OAS (oxydation anodique sulfurique), OAS fine (oxydation anodique sulfurique fine), PSAA (oxydation anodique acide phosphorique sulfurique), BSAA (oxydation anodique acide borique sulfurique), ou OAC (oxydation anodique chromique).

3. Procédé selon l'une des revendications 1 ou 2, **caractérisé en ce que** l'étape d'anodisation **A)** est une anodisation au cours de laquelle ladite pièce est immergée dans un bain aqueux comportant de l'acide sulfurique à une concentration comprise entre 150 et 250 g/L et à une température comprise entre 14 et 21°C, et
une tension continue est appliquée à ladite pièce immergée selon un profil de tension comportant une montée en tension à une vitesse inférieure à 1 V/min jusqu'à atteindre une valeur de tension dite de plateau comprise entre 5 et 13 V.

4. Procédé selon l'une des revendications 1 à 3, **caractérisé en ce que** l'alliage d'aluminium est choisi dans le groupe consistant en 2014, 2017A, 2024, 2214, 2219, 2618, AU5NKZr, 7175, 5052, 5086, 6061, 6063, 7010, 7020, 7050, 7050 T7451, 7055 T77, 7068, 7085 T7651, 7075, 7175 et 7475, AS7G06, AS7G03, AS10G, AS9U3, AS7G06, AS7G06 et AS10G étant obtenus par fabrication additive.

5. Procédé selon l'une quelconque des revendications 1 à 4, **caractérisé en ce que** le silicate de métal alcalin ou de métal alcalinoterreux est choisi dans le groupe consistant en silicate de lithium, silicate de sodium, silicate de potassium, silicate de calcium et silicate de magnésium.

6. Procédé selon l'une quelconque des revendications 1 à 5, **caractérisé en ce que** l'étape **D)** est réalisée avec un laser à fibre qui est un système dans lequel le milieu amplificateur est une fibre optique dopée avec l'ytterbium.

7. Procédé selon l'une quelconque des revendications 1 à 6, **caractérisé en ce que** l'étape **D)** est réalisée avec un laser à fibre qui est un laser amplificateur de puissance à oscillateur principal ou MOPA.

8. Procédé selon l'une quelconque des revendications 1 à 7, **caractérisé en ce qu'**il comporte après l'étape **A)** et préalablement à l'étape de colmatage au sel de silicate (étape **B)**), une étape **A1)** d'immersion de ladite pièce,
- dans un bain aqueux contenant un sel de chrome trivalent choisi dans le groupe consistant en CrF₃,xH₂O, CrCl₃,xH₂O, Cr(NO₃)₃,xH₂O, (CH₃CO₂)₂Cr,xH₂O, (CH₃CO₂)₇Cr₃(OH)₂,xH₂O, Cr₂(SO₄)₃,xH₂O, CrK(SO₄)₂,xH₂O (étape **A1-1)**) ;
puis éventuellement
- dans un bain aqueux contenant un composé oxydant choisi dans le groupe consistant en peroxyde d'hydrogène (H₂O₂), fluorure d'ammonium (NH₄F), fluoro-zirconate de potassium (K₂ZrF₆), permanganate de potassium (KMnO₄), permanganate de sodium (NaMnO₄) (étape **A1-2)**).

9. Procédé selon l'une quelconque des revendications 1 à 8, **caractérisé en ce qu'**il comporte avant l'étape **D)** et après le colmatage selon l'étape **B),** une étape **C)** un colmatage hydrothermal final dans une eau déionisée d'une résistivité égale ou supérieure à 0,01 MOhms, à une température supérieure à 96°C.

10. Procédé selon l'une quelconque des revendications 1 à 7, **caractérisé en ce qu'**il comporte les étapes suivantes :
**A)** une étape d'anodisation réalisée dans les conditions décrites dans la revendication 3 ; et
**B)** une étape de colmatage de la couche anodique formée sur ladite pièce à l'issue de l'étape **A),** le colmatage étant réalisé dans les conditions décrites dans la revendication 1 ; et
**D)** une étape de marquage par laser à fibre présentant une ou plusieurs des caractéristiques telles que décrites dans la revendication 1.

11. Procédé selon l'une quelconque des revendications 1 à 8, **caractérisé en ce qu'**il comporte les étapes suivantes :
**A)** une étape d'anodisation réalisée dans les conditions décrites dans la revendication 3 ; et
**A1)** une étape d'immersion de ladite pièce, dans laquelle l'étape **A1-1)** puis l'étape **A1-2)** sont réalisées dans les conditions décrites dans la revendication 8 ; et
**B)** une étape de colmatage de la couche anodique formée sur ladite pièce à l'issue de l'étape **A),** le colmatage étant réalisé dans les conditions décrites dans la revendication 1 ; et
**D)** une étape de marquage par laser à fibre présentant une ou plusieurs des caractéristiques telles que décrites dans la revendication 1.

12. Procédé selon l'une quelconque des revendications 1 à 9, **caractérisé en ce qu'**il comporte les étapes suivantes :
**A)** une étape d'anodisation réalisée dans les conditions décrites dans la revendication 3 ; et
**A1)** une étape d'immersion de ladite pièce, dans laquelle l'étape **A1-1)** puis l'étape **A1-2)** sont réalisées dans les conditions décrites dans la revendication 8 ; et
**B)** une étape de colmatage de la couche anodique formée sur ladite pièce à l'issue de l'étape **A),** le colmatage étant réalisé dans les conditions décrites dans la revendication 1 ; et
**C)** un colmatage hydrothermal final dans les conditions décrites dans la revendication 9 ; et
**D)** une étape de marquage par laser à fibre présentant une ou plusieurs des caractéristiques telles que décrites dans la revendication 1.

13. Procédé selon l'une quelconque des revendications 1 à 8, **caractérisé en ce qu'**il comporte les étapes suivantes :
**A)** une étape d'anodisation réalisée dans les conditions décrites dans la revendication 3 ; et
**A1)** une étape d'immersion de ladite pièce, dans laquelle l'étape **A1-1)** est réalisée dans les conditions décrites dans la revendication 8 ; et
**B)** une étape de colmatage de la couche anodique formée sur ladite pièce à l'issue de l'étape **A)** le colmatage étant réalisé dans les conditions décrites dans la revendication 1 ; et
**D)** une étape de marquage par laser à fibre présentant une ou plusieurs des caractéristiques telles que décrites dans la revendication 1.

14. Procédé selon l'une quelconque des revendications 1 à 8, **caractérisé en ce qu'**il comporte les étapes suivantes :
**A)** une étape d'anodisation réalisée dans les conditions décrites dans la revendication 3 ; et
**Im**) une étape d'imprégnation de ladite pièce anodisée à l'issue de l'étape **A)** dans un bain de colorants organiques ou minéraux, puis éventuellement
**A1)** une étape d'immersion de ladite pièce, dans laquelle l'étape **A1-1)** puis l'étape **A1-2)** sont réalisées dans les conditions décrites dans la revendication 8 ; et
**B)** une étape de colmatage de la couche anodique formée sur ladite pièce à l'issue de l'étape **A),** le colmatage étant réalisé dans les conditions décrites dans la revendication 1 ; et
**D)** une étape de marquage par laser à fibre présentant une ou plusieurs des caractéristiques décrites dans la revendication 1.

15. Utilisation d'un procédé de marquage selon l'une quelconque des revendications 1 à 14, pour la fabrication ou le marquage de pièces en aluminium ou en alliage d'aluminium destinées aux secteurs aéronautique, aérospatial, automobile, ferroviaire, horlogerie, médical, nucléaire, pétrolier.

## Patentansprüche

1. Verfahren zur Oberflächenmarkierung eines Stücks aus Aluminium oder aus einer Aluminiumlegierung, umfassend mindestens die folgenden Schritte:
**A)** einen Anodisierungsschritt;
**B)** einen Versiegelungsschritt der anodischen Schicht, die am Ende von Schritt **A) auf dem Stück gebildet wurde,**
wobei die Versiegelung durchgeführt wird
in einer wässrigen Lösung aus entionisiertem Wasser, das einen spezifischen Widerstand gleich oder größer als 0,01 MOhms aufweist, und aus 1 bis 500 g/l eines Alkalimetall- oder Erdalkalimetallsilikats bei einer Temperatur zwischen 60 °C und 100 °C,
oder
in dem entionisierten Wasser, das einen spezifischen Widerstand gleich oder größer als 0,01 MOhms aufweist, bei einer Temperatur zwischen 60 °C und 100 °C;
**D)** einen Markierungsschritt durch einen Faserlaserstahl, der eins oder mehrere der folgenden Merkmale aufweist
- eine Wellenlänge größer als 800 nm,
- eine Impulsdauer zwischen 0,5 und 10 ns,
- eine Laserfrequenz zwischen 400 und 3000 kHz,
- eine Leistung zwischen 5 und 80 W,
- eine Geschwindigkeit zwischen 1000 und 3000 mm/s,
- einen Zeilenabstand zwischen 0,0001 und 0,1 mm,
- eine Markierungszeit zwischen 4 und 200 Sek.

2. Verfahren nach Anspruch 1, **dadurch gekennzeichnet, dass** der Schritt **A)** eine Anodisierung des Typs TSA (anodische Oxidation mit einem Schwefelsäure/Weinsäure-Gemisch), OAS (anodische Oxidation mit Schwefelsäure), fein-OAS (feine anodische Oxidation mit Schwefelsäure), PSAA (anodische Oxidation mit einem Phosphorsäure/Schwefelsäure-Gemisch), BSAA (anodische Oxidation mit einem Borsäure/Schwefelsäure-Gemisch) oder OAC (anodische Oxidation mit Chromsäure) ist.

3. Verfahren nach Anspruch 1 oder 2, **dadurch gekennzeichnet, dass** der Anodisierungsschritt **A)** eine Anodisierung ist, im Laufe deren das Stück in ein wässriges Bad, das Schwefelsäure in einer Konzentration zwischen 150 und 250 g/l umfasst, und bei einer Temperatur zwischen 14 und 21 °C eingetaucht wird, und
an dem eingetauchten Stück eine Gleichspannung angelegt wird gemäß einem Spannungsprofil, das einen Spannungsanstieg bei einer Geschwindigkeit kleiner als 1 V/min umfasst, bis ein Spannungswert, Plateau genannt, zwischen 5 und 13 V erreicht wird.

4. Verfahren nach Anspruch 1 bis 3, **dadurch gekennzeichnet, dass** die Aluminiumlegierung ausgewählt wird aus der Gruppe bestehend aus 2014, 2017A, 2024, 2214, 2219, 2618, AU5NKZr, 7175, 5052, 5086, 6061, 6063, 7010, 7020, 7050, 7050 T7451, 7055 T77, 7068, 7085 T7651, 7075, 7175 und 7475, AS7G06, AS7G03, AS10G, AS9U3, AS7G06, AS7G06 und AS10G, die durch additive Fertigung erhalten werden.

5. Verfahren nach einem der Ansprüche 1 bis 4, **dadurch gekennzeichnet, dass** das Alkalimetall- oder Erdalkalimetallsilicat aus der Gruppe ausgewählt wird bestehend aus Lithiumsilicat, Natriumsilicat, Kaliumsilicat, Calciumsilicat und Magnesiumsilicat.

6. Verfahren nach einem der Ansprüche 1 bis 5, **dadurch gekennzeichnet, dass** der Schritt **D)** mit einem Faserlaser durchgeführt wird, der ein System ist, in dem das Verstärkermedium eine mit Ytterbium dotierte optische Faser ist.

7. Verfahren nach einem der Ansprüche 1 bis 6, **dadurch gekennzeichnet, dass** der Schritt **D)** mit einem Faserlaser durchgeführt wird, der ein Hauptoszillator-Leistungsverstärkerlaser oder MOPA ist.

8. Verfahren nach einem der Ansprüche 1 bis 7, **dadurch gekennzeichnet, dass** es nach dem Schritt **A)** und vor dem Versiegelungsschritt mit Silikatsalz (Schritt **B**)) einen Schritt **A1)** des Eintauchens des Stücks umfasst,
- in ein wässriges Bad, das ein dreiwertiges Chromsalz enthält, ausgewählt aus der Gruppe bestehend aus CrF₃,xH₂O, CrCl₃,xH₂O, Cr(NO₃)₃,xH₂O, (CH₃CO₂)₂Cr,xH₂O, (CH₃CO₂)₇Cr₃(OH)₂,xH₂O, Cr₂(SO₄)₃,xH₂O, CrK(SO₄)₂,xH₂O (Schritt**A1-1**));
danach gegebenenfalls
- in ein wässriges Bad, das eine oxidierende Verbindung enthält, ausgewählt aus der Gruppe bestehend aus Wasserstoffperoxid (H₂O₂), Ammoniumfluorid (NH₄F), Kaliumfluorzirkonat (K₂ZrF₆), Kaliumpermanganat (KMnO₄), Natriumpermanganat (NaMnO₄) (Schritt **A1-2**)).

9. Verfahren nach einem der Ansprüche 1 bis 8, **dadurch gekennzeichnet, dass** es vor dem Schritt **D)** und nach der Versiegelung gemäß Schritt **B)** einen Schritt **C)** der endgültige hydrothermale Versiegelung in einem entionisierten Wasser mit einem spezifischen Widerstand gleich oder größer als 0,01 MOhms, bei einer Temperatur größer als 96 °C, umfasst.

10. Verfahren nach einem der Ansprüche 1 bis 7, **dadurch gekennzeichnet, dass** es die folgenden Schritte umfasst:
**A)** einen Anodisierungsschritt, der unter den in Anspruch 3 beschriebenen Bedingungen durchgeführt wird; und
**B)** einen Versiegelungsschritt der am Ende des Schritts **A)** auf dem Stück gebildeten anodischen Schicht, wobei die Versiegelung unter den in Anspruch 1 beschriebenen Bedingungen durchgeführt wird; und
**D)** einen Markierungsschritt durch einen Faserlaser, der eins oder mehrere der Merkmale wie in Anspruch 1 beschrieben aufweist.

11. Verfahren nach einem der Ansprüche 1 bis 8, **dadurch gekennzeichnet, dass** es die folgenden Schritte umfasst:
**A)** einen Anodisierungsschritt, der unter den in Anspruch 3 beschriebenen Bedingungen durchgeführt wird; und
**A1)** einen Eintauchschritt des Stücks, wobei der Schritt A1-1), danach der Schritt **A1-2)** unter den in Anspruch 8 beschriebenen Bedingungen durchgeführt werden; und
**B)** einen Versiegelungsschritt der am Ende des Schritts **A)** auf dem Stück gebildeten anodischen Schicht, wobei die Versiegelung unter den in Anspruch 1 beschriebenen Bedingungen durchgeführt wird; und
**D)** einen Markierungsschritt durch einen Faserlaser, der eins oder mehrere der Merkmale wie in Anspruch 1 beschrieben aufweist.

12. Verfahren nach einem der Ansprüche 1 bis 9, **dadurch gekennzeichnet, dass** es die folgenden Schritte umfasst:
**A)** einen Anodisierungsschritt, der unter den in Anspruch 3 beschriebenen Bedingungen durchgeführt wird; und
**A1)** einen Eintauchschritt des Stücks, wobei der Schritt A1-1), danach der Schritt **A1-2)** unter den in Anspruch 8 beschriebenen Bedingungen durchgeführt werden; und
**B)** einen Versiegelungsschritt der am Ende des Schritts **A)** auf dem Stück gebildeten anodischen Schicht, wobei die Versiegelung unter den in Anspruch 1 beschriebenen Bedingungen durchgeführt wird; und
**C)** einen endgültigen hydrothermalen Versiegelungsschritt unter den in Anspruch 9 beschriebenen Bedingungen; und
**D)** einen Markierungsschritt durch einen Faserlaser, der eins oder mehrere der Merkmale wie in Anspruch 1 beschrieben aufweist.

13. Verfahren nach einem der Ansprüche 1 bis 8, **dadurch gekennzeichnet, dass** es die folgenden Schritte umfasst:
**A)** einen Anodisierungsschritt, der unter den in Anspruch 3 beschriebenen Bedingungen durchgeführt wird; und
**A1)** einen Eintauchschritt des Stücks, wobei der Schritt **A1-1)** unter den in Anspruch 8 beschriebenen Bedingungen durchgeführt wird; und
**B)** einen Versiegelungsschritt der am Ende des Schritts **A)** auf dem Stück gebildeten anodischen Schicht, wobei die Versiegelung unter den in Anspruch 1 beschriebenen Bedingungen durchgeführt wird; und
**D)** einen Markierungsschritt durch einen Faserlaser, der eins oder mehrere der Merkmale wie in Anspruch 1 beschrieben aufweist.

14. Verfahren nach einem der Ansprüche 1 bis 8, **dadurch gekennzeichnet, dass** es die folgenden Schritte umfasst:
**A)** einen Anodisierungsschritt, der unter den in Anspruch 3 beschriebenen Bedingungen durchgeführt wird; und
**Im)** einen Imprägnierungsschritt des am Ende des Schritts **A)** erhaltenen Stücks in einem Bad mit organischen oder mineralischen Farbstoffen, danach gegebenenfalls
**A1)** einen Eintauchschritt des Stücks, wobei der Schritt A1-1), danach der Schritt **A1-2)** unter den in Anspruch 8 beschriebenen Bedingungen durchgeführt werden; und
**B)** einen Versiegelungsschritt der am Ende des Schritts **A)** auf dem Stück gebildeten anodischen Schicht, wobei die Versiegelung unter den in Anspruch 1 beschriebenen Bedingungen durchgeführt wird; und
**D)** einen Markierungsschritt durch einen Faserlaser, der eins oder mehrere der in Anspruch 1 beschrieben Merkmale aufweist.

15. Verwendung eines Verfahrens zur Markierung nach einem der Ansprüche 1 bis 14 für die Fertigung oder die Markierung von Stücken aus Aluminium oder aus Aluminiumlegierung, die für die Sektoren Luft- und Raumfahrt, Automobilindustrie, Eisenbahn, Uhrenindustrie, Medizin, Kernenergie, Ölindustrie bestimmt sind.

## Claims

1. A method for marking the surface of an aluminum or aluminum alloy part, comprising at least the following steps:
**A)** an anodizing step;
**B)** a step of sealing the anodic layer formed on said part at the end of step **A),**
with the sealing being carried out
in an aqueous solution of deionized water having a resistivity equal to or greater than 0.01 MOhms, and from 1 to 500g/L of an alkali metal or alkaline earth metal silicate, at a temperature of between 60°C and 100°C,
or
in a deionized water with a resistivity equal to or greater than 0.01 MOhms, at a temperature of between 60°C and 100°C;
**D)** a marking step using a fiber laser beam having one or more of the following characteristics
- a wavelength greater than 800 nm,
- a pulse duration of between 0.5 and 10 ns,
- a laser frequency of between 400 and 3000 kHz,
- a power between 5 and 80W,
- a speed of between 1000 and 3000 mm/s,
- a line spacing of between 0.0001 and 0.1 mm,
- a marking time of between 4 and 200 sec.

2. The method according to claim 1, **characterized in that** step **A)** is an anodization of the TSA (tartric sulfuric anodizing), OAS (sulfuric acid anodizing), fine OAS (fine sulfuric acid anodizing), PSAA (phosphoric sulfuric acid anodizing), BSAA (boric sulfuric acid anodizing), or OAC (chromic acid anodizing) type.

3. The method according to one of claims 1 or 2, **characterized in that** the anodizing step **A)** is an anodizing step during which said part is immersed in an aqueous bath comprising sulfuric acid at a concentration of between 150 and 250 g/L and at a temperature of between 14 and 21°C, and
a direct voltage is applied to said immersed part according to a voltage profile comprising a voltage rise at a speed of less than 1 V/min until a voltage value referred to as plateau value of between 5 and 13 V is reached.

4. The method according to one of claims 1 to 3, **characterized in that** the aluminum alloy is selected from the group consisting of 2014, 2017A, 2024, 2214, 2219, 2618, AU5NKZr, 7175, 5052, 5086, 6061, 6063, 7010, 7020, 7050, 7050 T7451, 7055 T77, 7068, 7085 T7651, 7075, 7175 and 7475, AS7G06, AS7G03, AS10G, AS9U3, AS7G06, AS7G06 and AS10G being obtained by additive manufacturing.

5. The method according to any one of claims 1 to 4, **characterized in that** the alkali metal or alkaline earth metal silicate is selected from the group consisting of lithium silicate, sodium silicate, potassium silicate, calcium silicate and magnesium silicate.

6. The method according to any one of claims 1 to 5, **characterized in that** step **D)** is carried out with a fiber laser which is a system in which the amplifying medium is an optical fiber doped with ytterbium.

7. The method according to any one of claims 1 to 6, **characterized in that** step **D)** is carried out with a fiber laser which is a master oscillator power amplifier laser or MOPA.

8. The method according to any one of claims 1 to 7, **characterized in that** it comprises, after step **A)** and prior to the silicate salt sealing step (step **B**)), a step **A1)** of immersing said part,
- in an aqueous bath containing a trivalent chromium salt selected from the group consisting of CrF₃,xH₂O, CrCl₃,xH₂O, Cr(NO₃)₃,xH₂O, (CH₃CO₂)₂Cr,xH₂O, (CH₃CO₂)₇Cr₃(OH)₂,xH₂O, Cr₂(SO₄)₃,xH₂O, CrK(SO₄)₂,xH₂O (step **A1-1)**);
then optionally
- in an aqueous bath containing an oxidizing compound selected from the group consisting of hydrogen peroxide (H₂O₂), ammonium fluoride (NH₄F), potassium fluoro-zirconate (K₂ZrF₆), potassium permanganate (KMnO₄), sodium permanganate (NaMnO₄) (step **A1-2**)).

9. The method according to any one of claims 1 to 8, **characterized in that** it comprises, before step **D)** and after the sealing according to step **B),** a step **C)** of final hydrothermal sealing in deionized water with a resistivity equal to or greater than 0.01 MOhms, at a temperature greater than 96°C.

10. The method according to any one of claims 1 to 7, **characterized in that** it comprises the following steps:
**A)** an anodizing step carried out under the conditions described in claim 3; and
**B)** a step of sealing the anodic layer formed on said part at the end of step **A),** the sealing being carried out under the conditions described in claim 1; and
**D)** a fiber laser marking step having one or more of the characteristics described in claim 1.

11. The method according to any one of claims 1 to 8, **characterized in that** it comprises the following steps:
**A)** an anodizing step carried out under the conditions described in claim 3; and
**A1)** a step of immersing said part, in which step **A1-1)** and then step **A1-2)** are carried out under the conditions described in claim 8; and
**B)** a step of sealing the anodic layer formed on said part at the end of step **A),** the sealing being carried out under the conditions described in claim 1; and
**D)** a fiber laser marking step having one or more of the characteristics described in claim 1.

12. The method according to any one of claims 1 to 9, **characterized in that** it comprises the following steps:
**A)** an anodizing step carried out under the conditions described in claim 3; and
**A1)** a step of immersing said part, in which step **A1-1)** and then step **A1-2)** are carried out under the conditions described in claim 8; and
**B)** a step of sealing the anodic layer formed on said part at the end of step **A),** the sealing being carried out under the conditions described in claim 1; and
**C)** a final hydrothermal sealing under the conditions described in claim 9; and
**D)** a fiber laser marking step having one or more of the characteristics described in claim 1.

13. The method according to any one of claims 1 to 8, **characterized in that** it comprises the following steps:
**A)** an anodizing step carried out under the conditions described in claim 3; and
**A1)** a step of immersing said part, wherein step **A1-1)** is carried out under the conditions described in claim 8; and
**B)** a step of sealing the anodic layer formed on said part at the end of step **A),** the sealing being carried out under the conditions described in claim 1; and
**D)** a fiber laser marking step having one or more of the characteristics described in claim 1.

14. The method according to any one of claims 1 to 8, **characterized in that** it comprises the following steps:
**A)** an anodizing step carried out under the conditions described in claim 3; and
**Im)** a step of impregnating the said anodized part at the end of step **A)** in a bath of organic or inorganic dyes, then optionally
**A1)** a step of immersing said part, in which step **A1-1)** and then step **A1-2)** are carried out under the conditions described in claim 8; and
**B)** a step of sealing the anodic layer formed on said part at the end of step **A),** the sealing being carried out under the conditions described in claim 1; and
**D)** a fiber laser marking step having one or more of the characteristics described in claim 1.

15. A use of a marking method according to any one of claims 1 to 14, for the manufacture or marking of aluminum or aluminum alloy parts intended for the aeronautical, aerospace, automotive, rail, watchmaking, medical, nuclear and oil sectors.
